Europäisches Patentamt

(19) European Patent Office

Office européen des brevets

(11) Numéro de publication: **0 226 933**
**B1**

(12) **FASCICULE DE BREVET EUROPEEN**

(45) Date de publication du fascicule du brevet:
**12.09.90**

(21) Numéro de dépôt: **86117102.3**

(22) Date de dépôt: **09.12.86**

(51) Int. Cl.⁵: **B23P 19/06, B25B 21/00**

(54) **Outil de serrage/desserrage d'une connexion de tubes.**

(30) Priorité: **12.12.85  LU 86210**

(43) Date de publication de la demande:
**01.07.87 Bulletin 87/27**

(45) Mention de la délivrance du brevet:
**12.09.90 Bulletin 90/37**

(84) Etats contractants désignés:
**BE DE ES FR GB GR IT NL**

(56) Documents cités:
**DE-A- 2 016 352**
**DE-A- 2 850 927**
**GB-A- 2 046 155**
**US-A- 3 668 949**

(73) Titulaire: **COMMUNAUTE EUROPEENNE DE L'ENERGIE ATOMIQUE (EURATOM), Bâtiment Jean Monnet Plateau du Kirchberg Boîte Postale 1907,**
**L-1019 Luxembourg(LU)**

(72) Inventeur: **Van Loon, Leo, Via Lombardia 76,**
**I-21029 Corgeno(IT)**
Inventeur: **Pilliard, Rémy, Via Cascine 11,**
**I-21029 Cuirone(IT)**

(74) Mandataire: **Weinmiller, Jürgen,**
**Lennéstrasse 9 Postfach 24, D-8133 Feldafing(DE)**

ACTORUM AG

## Description

L'invention se réfère à un outil de serrage/desserrage d'une connexion de tubes, dont l'un est muni à son extrémité d'un filetage extérieur coaxial et d'un contre-écrou solidaire du tube, tandis que l'autre est muni à son extrémité associée d'un épaulement et d'un écrou coaxial emprisonné derrière cet épaulement et susceptible de s'engager sur ledit filetage. L'outil comprend une clé coopérant avec ledit écrou, une contre-clé solidaire d'un bâti de l'outil coopérant avec ledit contre-écrou, et des moyens moteur permettant de faire tourner la clé par rapport à la contre-clé autour de l'axe des tubes.

On connaît par le document GB-A 2 046 155 un outil automatique de serrage/desserage pour une connexion de tubes à l'aide d'un manchon qui est vissé par un filetage intérieur sur les deux tubes à connecter, et des contre-écrous vissés également sur les tubes et bloquant le manchon en position. L'outil est conçu pour serrer les contre-écrous et comporte à cet effet une clé, une contre-clé et des moyens moteur permettant de faire tourner la clé par rapport à la contre-clé.

Il est parfois impératif, par exemple en présence d'une ambiance nocive ou radio-active, de serrer ou desserrer une connexion de tubes à distance. A ces fins, on peut avoir recours à des télémanipulateurs, qui saisissent l'écrou et le contre-écrou et effectuent une rotation relative des deux pour le serrage ou le desserrage de la connexion en imitant en quelque sorte une opération manuelle. Lorsque les couples de serrage sont élevés, il faut recourir à des outils tels que des clés avec des bras longs, qui sont appliquées sur l'écrou et le contre-écrou par le télémanipulateur. Une telle opération est compliquée et nécessite en outre la présence du télémanipulateur pour toute l'opération de serrage ou de desserrage.

L'invention a donc pour but de concevoir un outil automatique permettant le serrage ou le desserrage d'un écrou coaxial emprisonné derrière un épaulement de l'une des tubes sur un filetage coaxial correspondant de l'autre tube. Une fois appliqué par le télémanipulateur sur la connexion en question, l'outil doit se maintenir de lui-même sur la connexion et effectuer son travail sans intervention par le télémanipulateur.

Ce but est atteint par l'outil tel que spécifié cidessus, qui est caractérisé par le fait que la surface cylindrique de l'écrou comporte une pluralité de rainures réparties régulièrement et orientées parallèlement à l'axe des tubes, alors que la clé a une forme complémentaire à un secteur angulaire de cette surface de l'écrou, que la clé est montée à travers un verin pneumatique de retraction sur un support de clé basculant, que ce support est guidé sur un bâti de l'outil de telle sorte que le mouvement basculant s'effectue autour de l'axe des tubes lorsque les moyens moteurs montés sur ledit bâti agissent sur ledit support.

Dans une réalisation préférée de l'outil selon l'invention, on prévoit au moins une paire de bras susceptibles de saisir l'un des tubes à distance de son extrémité, cette paire étant montée sur ledit bâti et pouvant être portée, à l'aide d'un moyen moteur, en position de saisie ou en position de libération. De préférence, il y a deux telles paires de bras, chacune susceptible de saisir l'un des tubes à distance de son extrémité respective.

Pour faciliter le placement de l'outil sur la connexion on prévoit une rondelle de référence sur l'un au moins des tubes, cette rondelle servant à positionner l'outil axialement.

L'invention sera décrite ci-après plus en détail à l'aide d'un exemple préféré de réalisation et des dessins.

La fig. 1 représente une vue sur l'outil, l'axe des tubes étant perpendiculaire au plan de la figure.

La fig. 2 représente le même outil en coupe le long de la ligne II-II sur la fig. 1.

Les figures 3 et 4 représentent deux éléments de l'outil selon les figures précédentes.

La fig. 5 représente une connexion de tubes, à laquelle s'applique l'outil selon l'invention.

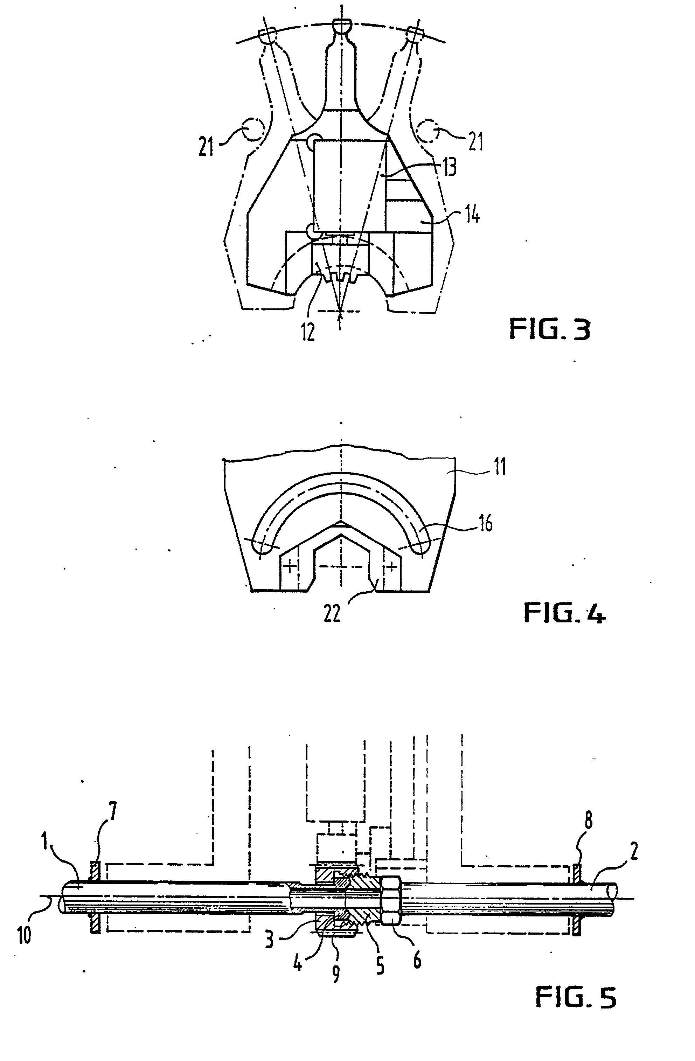

Le type de connexion de tubes auquel s'applique l'outil selon l'invention est représenté sur la fig. 5. On voit deux extrémités de tubes 1 et 2. L'un des tubes, 1, est muni d'un écrou 3, qui est emprisonné derrière un épaulement 4. L'autre tube 2 se termine par un filetage coaxial 5, qui coopère avec le filetage intérieur de l'écrou 3. Derrière le filetage 5, un contre-écrou 6 est soudé sur le tube 2, qui sert à éviter la rotation d'un outil lorsqu'un couple de serrage ou de desserrage est appliqué sur l'écrou 3. Les contours de cet outil sont dessinés par des lignes interrompues sur cette figure. On voit que cet outil s'étend entre une rondelle 7 solidaire du tube 1 à distance de son extrémité, et une rondelle 8 solidaire de l'autre tube 2 à distance de son extrémité. Ces rondelles servent à positionner l'outil axialement et de ce fait facilitent l'application de l'outil par un télémanipulateur. Comme on le voit de la fig. 5, le contre-ecrou 6 a une section classique hexagonale, alors que la surface cylindrique de l'écrou 3 est munie d'une pluralité de rainures 9, régulièrement réparties et orientées parallèlement à l'axe 6 des deux tubes 1 et 2. La surface extérieure de cet écrou 3 a donc une forme de roue dentée, dans laquelle s'engrène une clé 12 correspondante.

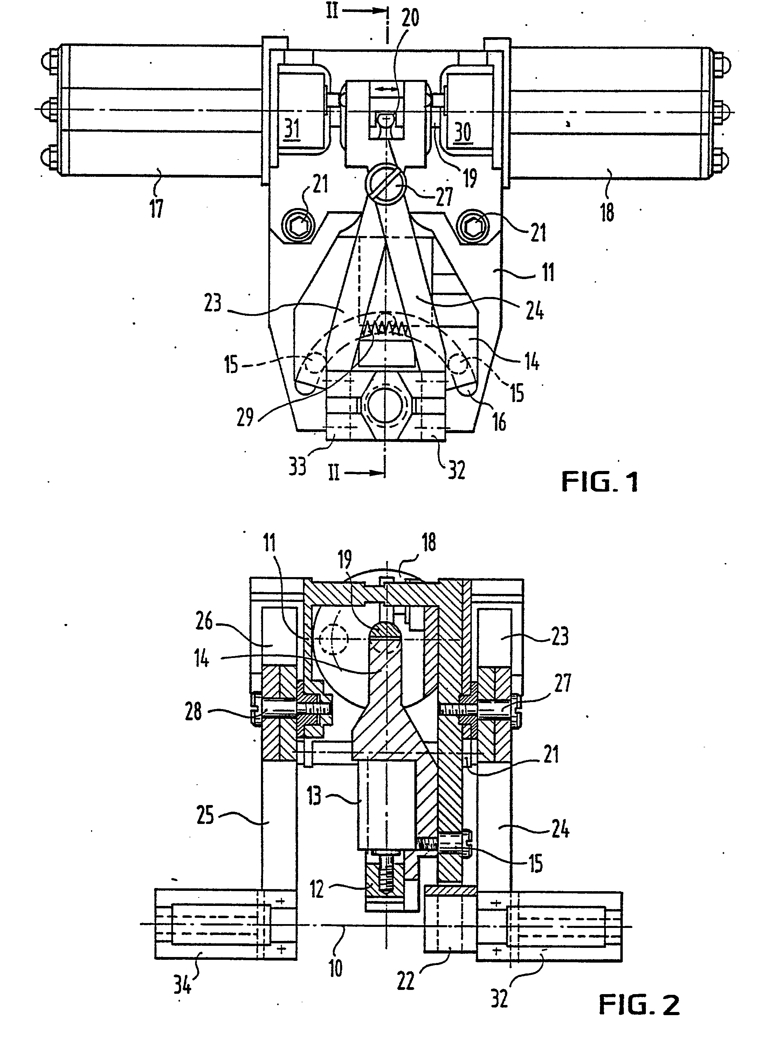

L'outil dont les contours partiels sont indiqués sur la fig. 5, est représenté en détail sur les figures 1 et 2, la vue selon la fig. 5 correspondant à celle de la fig. 2.

Cet outil est monté sur un bâti creux 11. La clé 12 coopérant avec l'écrou 3 est montée à travers un verin pneumatique à double effet 13 sur un support 14. Ce support peut basculer autour de l'axe 10 des tubes et il est guidé dans son mouvement de basculement sur le bâti 11 par trois vis 15, qui sont solidaires du support 14 et qui glissent dans une fente circulaire 16 ménagée dans le bâti 11. Le basculement est commandé par des moyens moteurs reversibles constitués par deux cylindres pneumatiques 17 et 18, qui se font face et dont les pistons sont reliés par une tige commune 19. Au centre de cette tige, l'extrémité du support basculant 14 pénètre dans une échancrure 20 de la tige de telle sorte que le mouvement de la tige 19 fait basculer le support 14 d'environ 30° autour de son axe de basculement qui coincide avec l'axe 10 des tubes 1 et 2. Sur la fig. 3, on voit le support 14 avec la clé 12 et le verin 13 en pointillé dans les deux positions extrêmes et en lignes continues dans sa position symétrique entre ces deux positions extrêmes. La fin de course des pistons se fait sur le fond des cylindres 17 et 18.

La forme de la clé 12 est adaptée à un secteur de la surface cylindrique de l'écrou 3, comme on le voit mieux sur la fig. 3. Cette clé 12 peut être déplacée perpendiculairement à l'axe 10 par le verin à double effet 13, qui est monté sur le support 14.

Une contre-clé 22 susceptible de coopérer avec le contre-écrou 6 est solidaire bu bâti. Comme on le voit sur la fig. 4, cette contre-clé est située sur l'extrémité du bâti 11.

Des boulons 21 réunissent les parties extrêmes du bâti 11 et rendent ainsi le bâti rigide.

Dans une réalisation simplifée, les éléments décrits jusqu' ici suffisent pour accomplir la fonction recherchée. Il suffit donc d'appliquer le bâti sur la connexion en engageant la contre-clé 22 sur le contre-écrou 6, et de commander alternativement le moyen moteur 18 et le verin 13 selon un cycle tel que la clé 12 est abaissée sur l'écrou 3, le support 14 bascule d'une position extrême à l'autre (voir fig. 3), la clé est retractée, le support bascule dans son autre position extrême à l'aide du moyen moteur 17 et ainsi de suite.

Selon une réalisation préférée de l'invention, on prévoit des moyens pour maintenir l'outil sur la connexion pendant l'opération de serrage ou de desserrage. Ces moyens sont constitués de deux paires de bras 23, 24; 25, 26. Les deux bras de chaque paire sont articulés sur le bâti chacune à l'aide d'un axe vissé 27, 28. En absence de force extérieure, un ressort 29 écarte les extrémités des bras de chaque paire, alors que deux verins pneumatiques 30 et 31 fournissent une force antagoniste à celle du ressort 29. Les bras s'étendent par une extrémité jusqu'à la zone des tubes, où ils se terminent chacun par un élément de saisie 32, 33; 34 (l'élément de saisie du bras 26 n'étant pas visible sur les figures). Les éléments de saisie sont adaptés au diamètre extérieur des tubes 1 et 2. En agissant sur les verins 30 et 31, les deux éléments de chaque paire s'appliquent de part et autre contre le tube et établissent ainsi un contact ferme entre le bâti et le tube lors du serrage et du desserrage.

Le fonctionnement de l'outil tel que représenté est le suivant :

Lorsqu'on veut desserrer une connexion de tubes telle que représentée sur la fig. 5, un télémanipulateur rapproche l'outil de la connexion, tout en étant guidé par les rondelles 7 et 8. Les verins 30 et 31 de chaque paire de bras sont désalimentés et les éléments de saisie sont par conséquent écartés. Lors de ce mouvement de rapprochement, la contre-clé 22 glisse sur le contre-écrou 6. Au besoin, on obtient ce résultat par une légère rotation de l'outil autour de l'axe 10. Dès que la contre-clé 22 est correctement en place, on commande les verins 30 et 31 pour fermer les bras et saisir les deux tubes de part et autre de l'extrémité des tubes 1 et 2. Puis, on commande le verin à double effet 13 pour baisser la clé 12 sur l'écrou 3. Grâce à la forme dentée de cet écrou et à la forme correspondante de la clé, l'accouplement entre ces deux éléments s'effectue indépendamment de la position relative de ces deux éléments. Ensuite, on commande l'un des pistons 17 ou 18 en fonction du sens de rotation désiré. Un ensemble pneumatique et/ou électrique non représenté assure ensuite un certain nombre de cycles d'opération en commandant alternativement le verin 13 et les verins 17 et 18, pour obtenir le desserrage de l'écrou 3. Au bout de ces cycles, on fait de nouveau intervenir le télémanipulateur pour enlever l'outil après avoir désalimenté les verins 30 et 31 de chaque paire de bras.

Pour le serrage d'une connexion de tubes, on procède de façon analogue. Il faut seulement veiller à engager l'écrou 3 provisoirement sur le filetage 5, d'un tour de vis par exemple, avant d'appliquer l'outil selon l'invention.

Comme il ressort de ce qui précède, l'outil ne nécessite aucune assistance permanente par un télémanipulateur; il est d'un encombrement faible au niveau des tubes à connecter, ce qui permet son utilisation également dans un faisceau compact de tubes. Grâce à la distance entre l'échancrure 20 et l'axe 10, on peut vaincre des couples élevés de des serrage à l'aide des cylindres pneumatiques 17 et 18.

L'invention n'est pas limitée à l'exemple de réalisation décrit ci-dessus. On peut en particulier remplacer les moyens moteur pneumatiques par des moyens hydrauliques ou électriques.

**Revendications**

1. Outil de serrage et de desserrage d'une connexion de tubes (1, 2) dont l'un (2) est muni à son extrémité d'un filetage extérieur coaxial (5) et d'un contre-écrou (6) solidaire du tube, tandis que l'autre (1) est muni à son extrémité associée d'un épaulement (4) et d'un écrou coaxial (3) emprisonné derrière cet épaulement et susceptible d'être engagé sur ledit filetage (5), l'outil comprenant une clé (12) coopérant avec ledit écrou (3), une contre-clé (22) solidaire d'un bâti (11) de l'outil coopérant avec ledit contre-écrou (6), et des moyens moteur (17, 18) permettant de faire tourner la clé par rapport à la contre-clé autour de l'axe (10) des tubes, caractérisé en ce que la surface cylindrique de l'écrou comporte une pluralité de rainures (9) réparties régulièrement et orientées parallèlement à l'axe (10) des tubes, alors que la clé (12) a une forme complémentaire à un secteur angulaire de cette surface de l'écrou, que la clé (12) est montée, à travers un verin pneumatique (13) à double effet, sur un support de clé (14) basculant, de telle sorte que la clé (12) peut être baissée sur l'écrou (3) pour effectuer l'accouplement entre la clé (12) et l'écrou (3) et peut être levée pour effectuer le désaccouplement, et que ce support (14) est guidé sur le bâti (11) de l'outil de telle sorte que le mouvement basculant s'effectue autour de l'axe (10) des tubes, lorsque les moyens moteur (17, 18) montés sur ledit bâti agissent sur ledit support.

2. Outil selon la revendication 1, caractérisé en ce qu'au moins une paire de bras (23, 24; 25, 26) est prévue, qui est susceptible de saisir l'un des tubes (1, 2) à distance de son extrémité, cette paire étant montée sur ledit bâti (11) et pouvant être portée, à l'aide d'un moyen moteur (30, 31), en position de saisie ou en position de libération.

3. Outil selon la revendication 2, caractérisé en ce qu'il y a deux paires de bras (23, 24; 25, 26), chacune susceptible de saisir l'un des tubes (1, 2) à distance de son extrémité respective.

4. Outil selon l'une des revendications 2 et 3, caractérisé en ce que l'un au moins des tubes (1, 2) est muni d'une rondelle de référence (7, 8) servant à positionner l'outil axialement.

## Patentansprüche

1. Werkzeug zum Anziehen und Lösen einer Rohrverbindung (1, 2), wobei ein Rohr (2) an seinem Ende mit einem äußeren koaxialen Gewinde (5) und einer fest mit dem Rohr verbundenen Gegenmutter (6) versehen ist, während das andere (1) an seinem entsprechenden Ende mit einer Schulter (4) und einer koaxialen Mutter (3) versehen ist, die hinter dieser Schulter blockiert ist und auf das Gewinde (5) aufgeschraubt werden kann, wobei das Werkzeug einen Schlüssel (12), der mit der Mutter (3) zusammenwirkt, einen Gegenschlüssel (22), der fest mit einem Gestell (11) des Werkzeugs verbunden ist und mit der Gegenmutter (6) zusammenwirkt, und Antriebsmittel (17, 18) aufweist, um den Schlüssel in bezug auf den Gegenschlüssel um die Achse (10) der Rohre zu drehen, dadurch gekennzeichnet, daß die Zylinderoberfläche der Mutter eine Vielzahl von regelmäßig verteilten und parallel zur Achse (10) der Rohre ausgerichteten Nuten (9) aufweist, während der Schlüssel (12) eine zu einem Winkelsektor dieser Oberfläche der Mutter komplementäre Form hat, daß der Schlüssel (12) durch ein Doppeleffekt-Pneumatikelement (13) auf einem kippbaren Schlüsselträger (14) angeordnet ist, so daß der Schlüssel (12) auf die Mutter (3) abgesenkt werden kann, um die Kopplung zwischen dem Schlüssel (12) und der Mutter (3) durchzuführen, und angehoben werden kann, um die Entkopplung zu bewirken, und daß dieser Träger (14) auf dem Gestell (11) des Werkzeugs so geführt wird, daß die Kippbewegung um die Achse (10) der Rohre verläuft, wenn die auf dem Gestell angeordneten Antriebsmittel (17, 18) auf den Träger einwirken.

2. Werkzeug nach Anspruch 1, dadurch gekennzeichnet, daß mindestens ein Paar von Armen (23, 24; 25, 26) vorgesehen ist, die eines der Rohre (1, 2) entfernt von seinem Ende fassen können, wobei dieses Paar von Armen auf dem Gestell (11) angeordnet ist und mit Hilfe eines Antriebsmittels (30, 31) in eine Greif- oder eine Lösestellung gebracht werden kann.

3. Werkzeug nach Anspruch 2, dadurch gekennzeichnet, daß es zwei Paare von Armen (23, 24; 25, 26) gibt, die je eines der Rohre (1, 2) entfernt von seinem jeweiligen Ende ergreifen können.

4. Werkzeug nach einem der Ansprüche 2 und 3, dadurch gekennzeichnet, daß mindestens eines der Rohre (1, 2) eine Bezugsscheibe (7, 8) aufweist, die dazu dient, das Werkzeug axial zu positionieren.

## Claims

1. A tool for tightening and untightening a tube connection (1, 2), one of the tubes (2) being supplied at its end with an outer coaxial thread (5) and a counter-nut (6) integral with the tube, whereas the other tube (1) is supplied at its associated end with a shoulder (4) and a coaxial nut (3) imprisoned behind this shoulder and apt to engage on said thread (5), the tool comprising a key (12) co-operating with said nut (3), a counter-key (22), integral with a frame (11) of the tool, co-operating with said counter-nut (6), and drive means (17, 18) permitting to make the key turn with respect to the counter-key about the axis (10) of the tubes, characterized in that the cylindrical surface of the nut comprises a plurality of grooves (9), regularly spaced and oriented parallelly to the axis (10) of the tubes, whereas the key (12) has a shape which is complementary to an angular section of this surface of the nut, that the key (12) is mounted through a pneumatic double effect jack (13) on a tiltable key support (14), such that the key (12) can be lowered onto the nut (3) in order to carry out the coupling between the key (12) and the nut (3) and can be raised for discoupling purposes and that this support (14) is guided on the frame (11) of the tool in such a way that the tilting movement is carried out about the axis (10) of the tubes when the drive means (17, 18) mounted on said frame act upon said support.

2. A tool according to claim 1, characterized in that at least one pair of arms (23, 24; 25, 26) is provided which is apt to seize one of the tubes (1, 2) at a distance from its end, this pair being mounted on said frame (11) and being capable of being carried, by means of a drive means (30, 31), into a seizing position or a release position.

3. A tool according to claim 2, characterized in that there are two such pairs of arms (23, 24; 25, 26), each being apt to seize one of the tubes (1, 2) at a distance from its respective end.

4. A tool according to one of claims 2 and 3, characterized in that at least one of the tubes (1, 2) is supplied with a reference washer (7, 8) serving to position the tool axially.

FIG. 1

FIG. 2

FIG. 3

FIG. 4

FIG. 5